# FASCICULE DE BREVET EUROPEEN

(11) **EP 1 785 635 B1**
(45) Date de publication et mention de la délivrance du brevet: **16.04.2008**
(21) Numéro de dépôt: 05360045.8
(22) Date de dépôt: 10.11.2005
(51) Int. Cl.: F16B 19/00, F16B 17/00, B62D 25/24

(54) **Système de fixation sur tôle mince**
Befestigungssystem für dünnes Blech
Fastening system for a thin metal sheet

(43) Date de publication de la demande: 16.05.2007
(73) Titulaire: STEELCASE SA, 67200 Strasbourg (FR)
(72) Inventeur: Malard, Alain, 67203 Oberschaffolsheim (FR)
(74) Mandataire: Merckling, Norbert

(56) Documents cités:
- DE-A1- 10 231 274
- US-A- 5 505 324

## Description

La présente invention se rapporte au domaine technique général des dispositifs et des systèmes de fixation de pièces sur des tôles. En particulier, l'invention concerne un système de fixation d'une pièce au contact d'une tôle mince. Par tôle mince, il convient d'entendre des tôles dont l'épaisseur est en général inférieure ou égale à 1 mm.

On connaît, par exemple du document US-A-5,505,324, des systèmes de fixation d'une pièce au contact d'une tôle par engagement d'une partie d'insertion de la pièce dans un orifice de la tôle jusqu'à une mise en appui contre la tôle d'une extrémité, de type tête, de la pièce. Des formes respectives de la partie d'insertion et de l'orifice sont prévues pour empêcher une rotation de la partie d'insertion dans l'orifice.

La partie d'insertion comporte des lames ressorts présentant des extrémités libres s'écartant radialement vers l'extérieur de telle sorte que, sollicitées radialement vers l'intérieur à l'insertion, elles sont rappelées à leur position d'origine et s'opposent à l'extraction de la pièce, lorsque la tête arrive au voisinage de la position d'appui sur une face d'appui de la tôle.

Il est connu de réaliser un clippage d'une pièce rapportée sur une tôle support, d'épaisseur comprise entre 1 et 2,5 mm, pour réaliser par exemple un mécanisme de serrure. Ces systèmes connus présentent cependant l'inconvénient de ne pas être adaptés à des tôles minces, c'est-à-dire présentant des épaisseurs faibles et en particulier inférieures ou égales à 1 mm. En effet, dans les systèmes de clippage connus et proposés par divers fabricants, il subsiste lors du clippage un jeu d'environ 0,3 mm entre la face d'appui de la tête en contact avec une tôle mince et l'extrémité des lames ressorts. Ce jeu, résultant de contraintes de montage des lames ressort dans une partie d'isertion du type fût ne peut pas être réduit. La pièce destinée à être fixée sur la tôle mince n'est donc pas immobilisée axialement sur la tôle mince. On connaissait également des lames ressort avec des extémités biseautées pour s'adapter à des tôles d'épaisseurs différentes et supérieures à 1 mm. L'existance du jeu mécanique mentionné ci-dessus pour une application aux tôles minces fait travailler les lames ressort sur leurs pointes de leurs extrémités libres, générant une moindre tenue du fait qu'elles ne sont pas assez comprimées. Elles peuvent aussi ne pas être en contact avec la tôle support, compte tenu des tolérances de fabrication. Lorsque le fût n'est pas intimement lié à la tôle support, on favorise l'usure prématurée de pièces constitutives d'une telle fixation. Il n'est par ailleurs pas souhaitable de procéder à des remplacements fréquents de telles pièces usées ou dégradées, dans la mesure où ces interventions, en l'occurrence sur une tôle mince, risquent de provoquer des détériorations ou déformations de la tôle mince.

Les systèmes de fixation connus, malgré leur possibilité d'adaptation à différentes épaisseurs de tôle, ne sont ainsi pas adaptés à des tôles minces.

Selon l'invention, la tôle est une tôle mince et des secteurs de la périphérie de l'orifice, en nombre identique au nombre des lames ressorts, sont découpées en pattes radiales, puis déformées de manière à faire saillie de la tôle mince avec des extrémités libres desdites pattes radiales, à l'opposé de la face d'appui en présentant un écartement axial H, entre la face d'appui et les extrémités libres des pattes radiales, sensiblement identique à l'écartement entre la tête et l'extrémité libre des lames ressorts.

On obtient ainsi une liaison mécanique intime, sans jeu fonctionnel entre la tôle mince et la partie d'insertion.

Selon un exemple de réalisation, les pattes radiales déformées délimitent des encoches périphériques pour un positionnement angulaire de la partie d'insertion, en vue de son engagement, la largeur des encoches étant adaptée à la largeur des lames ressort pour réduire au mieux la rotation de la partie d'insertion dans l'orifice.

Un positionnement angulaire optimal de la pièce à insérer est obtenu dès son engagement dans l'orifice. Ceci est intéressant car un ajustement complémentaire de l'orientation de la pièce est impossible une fois ladite pièce complètement insérée et par conséquent immobilisée sur la tôle mince.

Selon un exemple de réalisation, les lames ressorts présentent à leur extrémité libre une forme biseautée. Les écarts de dimensions axiales liés par exemple à un défaut de fabrication des lames ressort et/ou des pattes radiales peuvent ainsi être rattrapés et la liaison intime et rigide n'est pas altérée.

Selon un exemple de réalisation, les lames ressorts présentent une forme vrillée au moins au voisinage de leur extrémité libre. Cette forme vrillée permet d'optimiser le positionnement du chant des extrémités libres des lames ressort, en regard des pattes radiales déformées et de pallier le cas échéant une dispersion dimensionnelle dans la position radiale des pattes radiales déformées d'une tôle à l'autre. Les directions d'extension longitudinales des chants des extrémités libres des lames ressorts et des pattes radiales présentent ainsi un écart angulaire de manière à venir en contact mutuel, même avec une dispersion de la position radiale des pattes radiales.

Selon un exemple de réalisation, les pattes radiales s'étendent selon une direction sensiblement orthogonale à la tôle mince.

Selon un autre exemple de réalisation, les pattes radiales présentent une forme sensiblement coudée ou en L, dont la partie terminale s'étend sensiblement parallèlement à la face d'appui de la tôle mince.

Selon un exemple de réalisation, la périphérie de l'orifice comporte au moins deux pattes radiales déformées. On améliore la rigidité et par conséquent la fiabilité de la liaison entre la partie d'insertion et la tôle mince en augmentant le nombre de pattes radiales et le nombre de lames ressort.

La partie d'insertion présente par exemple une forme en fût et les lames ressorts sont des pièces rapportées sur le fût.

Alternativement, le système de fixation peut comporter au moins deux parties d'insertion présentant chacune sensiblement une forme en U, dont une première branche présente une extrémité solidaire de la tête et dont une seconde branche est libre et constitue la lame ressort. On diminue ainsi le poids et l'encombrement de la partie d'insertion. Ceci est particulièrement avantageux lorsqu'une pièce additionnelle est destinée à être fixée ou rapportée directement sur la tête et non destinée à s'engager au travers de l'orifice de la tôle mince.

La présente invention concerne également un mécanisme de serrure associé à un système de fixation tel que précité et en particulier intégré dans le fût ou dans la tête de la pièce d'insertion.

D'autres caractéristiques et avantages ressortiront également de la description détaillée figurant ci-après en référence aux dessins annexés, donnés à titre d'exemples non limitatifs, dans lesquels :
- la figure 1 est un exemple de réalisation d'une tôle mince d'un système de fixation conforme à l'invention, avec des pattes radiales s'étendant orthogonalement à la tôle;
- la figure 2 est un autre exemple de réalisation d'une tôle mince d'un système de fixation conforme à l'invention , avec des pattes radiales présentant une forme coudée ou en L;
- la figure 3 représente un exemple de système de fixation conforme à l'invention dans un état assemblé ;
- la figure 4 représente une vue en coupe du système de fixation de la figure 3;
- la figure 5a est un détail référencé A de la figure 4 ;
- la figure 5b représente un détail d'un autre exemple de réalisation, d'un système de fixation conforme à l'invention dans lequel le fût constitutif de la partie d'insertion est remplacé par les lames ressort ;
- les figures 6, 7 et 8 représentent un premier exemple de réalisation des éléments constitutifs d'un système de fixation conforme à l'invention , dont la tôle présente deux encoches périphériques;
- les figures 9, 10 et 11 représentent un second exemple de réalisation des éléments constitutifs d'un système de fixation conforme à l'invention , dont la tôle présente trois encoches périphériques;
- les figures 12, 13 et 14 représentent une variante de réalisation des éléments constitutifs d'un système de fixation des figures 6,7 et 8, dont la tôle présente également deux encoches périphériques.

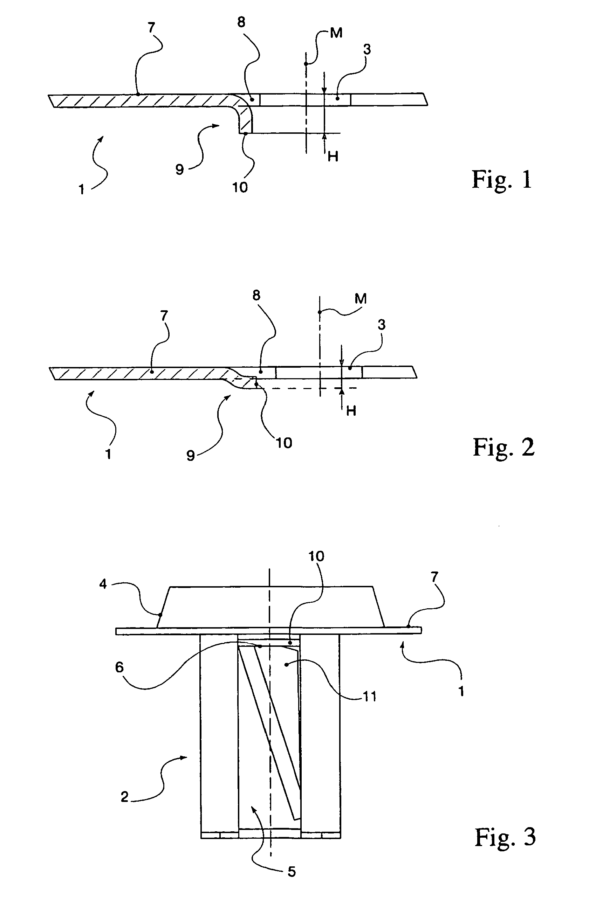

Les figures 1, 2 et 3 représentent des éléments constitutifs du système de fixation conforme à l'invention. Ce dernier concerne une fixation d'une pièce au contact d'une tôle (1) par insertion d'une partie d'insertion (2), du type fût, de la pièce. L'insertion se fait dans un orifice (3) de la tôle (1) jusqu'à une mise en appui contre ladite tôle (1) d'un élément d'extrémité de la pièce. Cet élément d'extrémité est par exemple une tête (4).

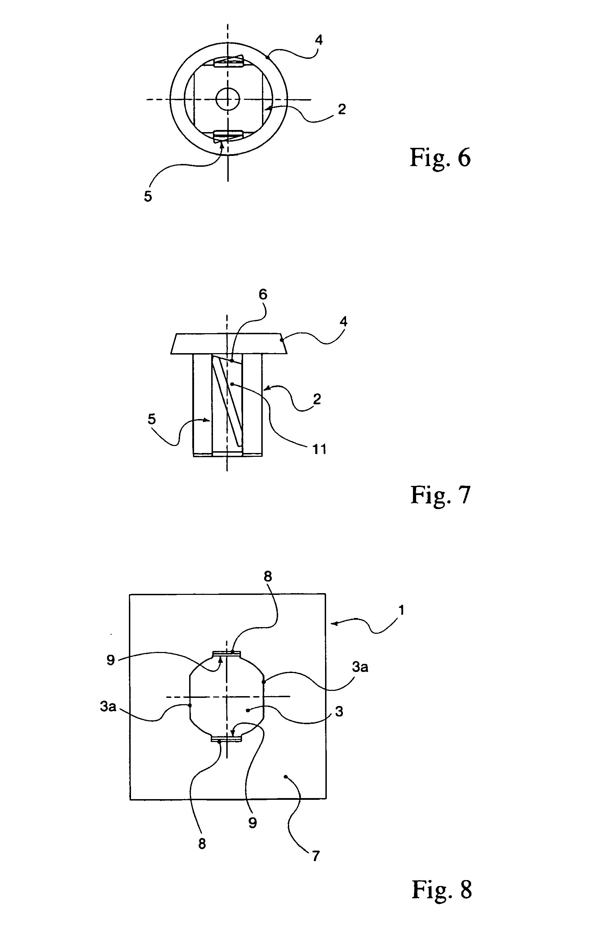

Les formes respectives du fût (2) et de l'orifice (3) sont prévues pour empêcher un débattement en rotation dudit fût (2) dans l'orifice (3). On pourra se reporter aux divers exemples de réalisation représentés aux figures 6 à 14.

Le fût (2) comporte des lames ressorts (5) présentant des extrémités libres (6) dépassant radialement du fût (2). Les extrémités libres (6) dépassent radialement du fût (2) de telle sorte que, sollicitées vers ledit fût (2) à l'insertion dans l'orifice (3), elles sont rappelées à leur position d'origine, s'opposant à l'extraction du fût (2) lorsque la tête (4) arrive au voisinage de la position d'appui sur la tôle (1). Cette dernière présente une face d'appui (7) plane du côté de la tête (4).

La tôle (1) est une tôle mince dont l'épaisseur n'excède de préférence pas 1 mm. Des secteurs (8) de la périphérie de l'orifice (3) en nombre identique au nombre de lames ressorts (5) sont découpés et déformés en pattes radiales (9). Ces pattes radiales (9), déformées, présentent des extrémités libres (10) faisant saillie de la tôle (1) mince, sur une face opposée à la face d'appui (7). Les extrémités libres (10) présentent ainsi avec la face d'appui (7) un écartement axial H sensiblement identique à l'écartement existant entre la tête (4) et l'extrémité libre (6) des lames ressorts (5). Par écartement axial H, il convient d'entendre les dimensions prises selon l'axe M de l'orifice (3) entre la face d'appui (7) et les extrémités libres (10) des pattes radiales (9). Ces dernières permettent ainsi d'augmenter localement l'épaisseur de la tôle (1) mince grâce à une opération de découpe et de déformation, notamment par emboutissage.

Selon les exemples de réalisation représentés aux figures notamment 8, 11 et 14, les pattes radiales (9), déformées, délimitent des encoches périphériques correspondant à des secteurs périphériques (8) donnés et ce pour un positionnement angulaire du fût (2) en vue de son insertion. Cette dernière est obtenue par une correspondance entre les encoches et les lames ressorts (5). La forme de l'orifice (3) est donc sensiblement complémentaire à celle que présente le fût (2) en section transversale. Les encoches périphériques, avec une largeur à peine supérieure à la largeur des lames ressort, permettent de réduire au mieux la rotation du fût (2) lors de son insertion dans l'orifice (3) et avant son immobilisation en fin de course par clippage.

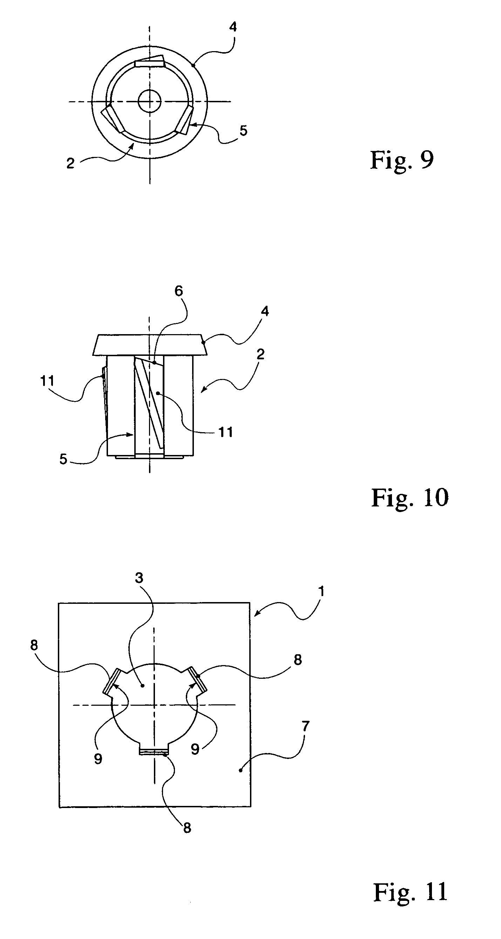

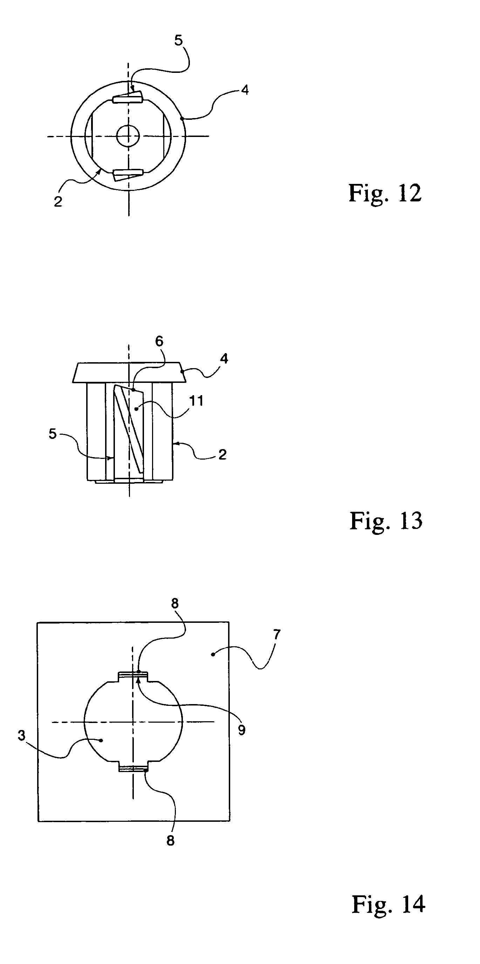

Différents exemples de réalisation sont ainsi représentés respectivement aux figures 6 à 8, aux figures 9 à 11 ainsi qu'aux figures 12 à 14. Dans l'exemple de la figure 8, l'orifice (3) présente deux portions périphériques sensiblement rectilignes (3a) reliées entre elles par deux secteurs périphériques (8) sensiblement arrondis dans lesquels sont ménagées les encoches périphériques ainsi que les pattes radiales (9). C'est la déformation des pattes radiales (9) qui permet de réaliser les encoches de positionnement, lesquelles grâce à l'arrondi de la base des pattes radiales (9) issu du pliage (déformation), améliore le centrage et l'introduction du fût(2).

Dans l'exemple de réalisation de la figure 11, l'orifice (3) présente une périphérie sensiblement circulaire sur laquelle sont réparties angulairement trois pattes radiales (9), déformées, délimitant chacune une encoche correspondante.

Alternativement les pattes radiales (9) sont prévues sur des portions rectilignes de l'orifice (3) à la figure 14. Le positionnement relatif des lames ressorts (5) sur le fût (2) est adapté en conséquence.

Selon un exemple de réalisation, les lames ressorts (5) présentent à leur extrémité libre (6) une forme biseautée. Ceci permet aux lames ressorts (5) de s'adapter à des épaisseurs différentes de la tôle (1) mince et le cas échéant à compenser des tolérances de fabrication du fût (2), des pattes radiales (9) et/ou des lames ressorts (5).

Les lames ressorts (5) présentent également selon un exemple de réalisation une forme vrillée au moins dans une zone (11) au voisinage de leur extrémité libre (6). On obtient ainsi un engagement plus efficace et fiable de l'extrémité libre (6) sur l'extrémité libre (10) des pattes radiales (9) déformées, dès que la tête (4) vient au contact de la face d'appui (7). La combinaison d'une forme vrillée et d'une forme biseautée des lames ressorts (5) permet un engagement progressif sur l'extrémité libre (10) de la patte radiale (9) dès que la tête (4) arrive au voisinage de la face d'appui (7). La forme vrillée permet également de compenser des défauts d'écartement radiaux vers l'extérieur des lames ressorts (5). La fiabilité de l'assemblage par clippage sur une tôle (1) mince et la rigidité de la liaison entre le fût (2) et la tôle mince (1) sont ainsi améliorées et ce par l'agrandissement de la surface de frottement entre les lames ressort (5) et les pattes radiales (9) et par une meilleure sollicitation des lames ressort (5).

Les pattes radiales (9) déformées s'étendent par exemple selon une direction sensiblement orthogonale à la tôle (1) mince. Cet exemple de réalisation est par exemple représenté à la figure 1, dans laquelle les pattes radiales 9 s'étendent selon une direction sensiblement parallèle à la direction axiale M.

Selon un autre exemple de réalisation représenté par exemple à la figure 2, les pattes radiales (9), déformées, présentent une forme sensiblement en marche d'escalier, en L ou une forme coudée et s'étendent avec leurs extrémité libres (10), sensiblement orthogonalement à la direction axiale M.

La périphérie de l'orifice (3) comporte au moins deux pattes radiales (9) tel que cela est représenté par exemple aux figures 8 et 14.

Selon d'autres exemples de réalisation, dont une variante est représentée à la figure 11, un nombre différent de pattes radiales (9) déformées peut être prévu sans sortir du cadre de la présente invention. Le nombre de lames ressorts (5) sur le fût (2) sera donc adapté en conséquence ainsi que leur positionnement relatif sur ledit fût (2).

Les lames ressorts (5) sont des pièces rapportées sur la périphérie du fût (2)et solidarisées sur ce dernier par rivetage, clipsage ou autre moyen de liaison.

Les fûts (2) permettent par exemple d'intégrer un mécanisme de serrure destiné notamment au verrouillage / déverrouillage de battants dans des mobiliers présentant des parois en tôle (1) mince.

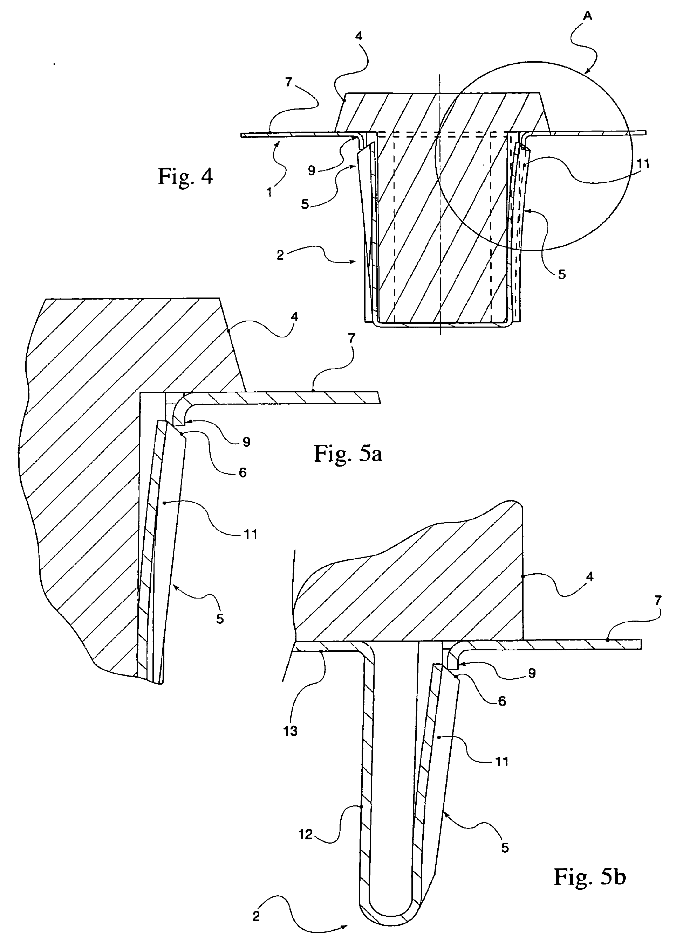

En variante, les lames ressort (5) peuvent être solidaires d'un support non inséré dans l'orifice de la tôle (1) mince, en lieu et place d'un fût (2). Ce support devant être en contact avec la face d'appui (7), est par exemple constitué de la tête (4) sur laquelle sont fixées les lames ressort (5). Ces dernières sont constituées de lames repliées sensiblement en forme de U, représentées par exemple à la figure 5b. Les parties d'insertion (2) présentent donc chacune une forme en U dont une première branche (12) présente une extrémité (13) solidaire de la tête (4), une seconde branche, libre, constituant la lame ressort (5).

La présente invention concerne également un mécanisme de serrure associé à un système de fixation tel que décrit.

L'invention peut être applicable à tout composant destiné à être fixé sur des tôles (1) minces. Son avantage est de s'affranchir de la problématique de liaison sur une tôle (1) mince et d'assurer une liaison fiable entre le composant et son support (tôle mince).

## Revendications

1. Système de fixation d'une pièce au contact d'une tôle (1), par engagement d'une partie d'insertion (2) de la pièce dans un orifice (3) de la tôle (1) jusqu'à une mise en appui contre la tôle (1) d'une extrémité du type tête (4) de la pièce, les formes respectives de la partie d'insertion (2) et de l'orifice (3) étant prévues pour empêcher un débattement par rotation de la partie d'insertion (2) dans l'orifice (3), la partie d'insertion (2) comportant des lames ressorts (5) présentant des extrémités libres (6) s'écartant radialement vers l'extérieur de telle sorte que, sollicitées radialement vers l'intérieur à l'insertion, elles sont rappelées à leur position d'origine et s'opposent à l'extraction de la pièce lorsque la tête (4) arrive au voisinage de la position d'appui sur une face d'appui (7) de la tôle (1),
**caractérisé en ce que**
la tôle (1) est une tôle mince et **en ce que** des secteurs (8) de la périphérie de l'orifice (3), en nombre identique au nombre des lames ressorts (5), sont découpées en pattes radiales (9) puis déformées de manière à faire saillie de la tôle (1) mince avec des extrémités libres (10) desdites pattes radiales, à l'opposé de la face d'appui (7) en présentant un écartement axial H entre la face d'appui (7) et les extrémités libres (10) des pattes radiales (9) sensiblement identique à l'écartement entre la tête (4) et les extrémités libres (6) des lames ressorts (5).

2. Système de fixation selon la revendication 1, **caractérisé en ce que** les pattes radiales (9) délimitent des encoches périphériques pour un positionnement angulaire de la partie d'insertion (2) en vue de son engagement, la largeur des encoches étant adaptée à la largeur des lames ressort (5) pour réduire au mieux la rotation de la partie d'insertion (2) dans l'orifice (3).

3. Système de fixation selon la revendication 1 ou 2, **caractérisé en ce que** les lames ressorts (5) présentent à leur extrémité libre (6) une forme biseautée.

4. Système de fixation selon l'une quelconque des revendications 1 à 3, **caractérisé en ce que** les lames ressorts (5) présentent une forme vrillée au moins dans une zone (11) au voisinage de leur extrémité libre (6).

5. Système de fixation selon l'une quelconque des revendications 1 à 4, **caractérisé en ce que** les pattes radiales (9) s'étendent selon une direction sensiblement orthogonale à la face d'appui (7).

6. Système de fixation selon l'une quelconque des revendications 1 à 4, **caractérisé en ce que** les pattes radiales (9) présentent une forme sensiblement coudée ou en L, dont la partie terminale s'étend sensiblement parallèlement à la face d'appui (7).

7. Système de fixation selon l'une quelconque des revendications 1 à 6, **caractérisé en ce que** la périphérie de l'orifice (3) comporte au moins deux pattes radiales déformées (9).

8. Système de fixation selon l'une quelconque des revendications 1 à 7, **caractérisé en ce que** la partie d'insertion (2) présente une forme du type fût.

9. Système de fixation selon la revendication 8, **caractérisé en ce que** les lames ressorts (5) sont des pièces rapportées sur le fût.

10. Système de fixation selon l'une quelconque des revendications 1 à 7, **caractérisé en ce qu**'il comporte au moins deux parties d'insertion (2) présentant chacune sensiblement une forme en U, dont une première branche (12) présente une extrémité (13) solidaire de la tête (4) et dont une seconde branche libre constitue la lame ressort (5).

11. Mécanisme de serrure associé à un système de fixation conforme à l'une quelconque des revendications 1 à 10.

## Claims

1. System for fixing a part in contact with a sheet (1), by locating an insert piece (2) of the part in an orifice (3) of the sheet (1) until one end of the part in the form of a head (4) is supported against the sheet (1), the respective shapes of the insert piece (2) and orifice (3) being designed to prevent the insert piece (2) from moving in rotation in the orifice (3), which insert piece (2) has spring blades (5) with free ends (6) extending radially outwards so that when biased radially inwards during insertion, they are returned to their original position and oppose extraction of the part once the head (4) has reached the point next to the support position on a support face (7) of the sheet (1),
**characterised in that**
the sheet (1) is a thin sheet and sectors (8) of the periphery of the orifice (3), the number of which is identical to the number of spring blades (5), are cut to form radial tabs (9) and then deformed so as to project out from the thin sheet (1) with free ends (10) of said radial tabs extending away from the support face (7) resulting in an axial distance H between the support face (7) and the free ends (10) of the radial tabs (9) substantially identical to the distance between the head (4) and the free ends (6) of the spring blades (5).

2. Fixing system as claimed in claim 1, **characterised in that** the radial tabs (9) bound peripheral edges which result in an angular positioning of the insert piece (2) in order to locate it, the width of the edges being adapted to the width of the spring blades (5) in order to reduce rotation of the insert piece (2) in the orifice (3) as effectively as possible.

3. Fixing system as claimed in claim 1 or 2, **characterised in that** the spring blades (5) have a bevelled shape at their free end (6).

4. Fixing system as claimed in any one of claims 1 to 3, **characterised in that** the spring blades (5) are spiral-shaped, at least in a zone (11) next to their free end (6).

5. Fixing system as claimed in any one of claims 1 to 4, **characterised in that** the radial tabs (9) extend in a substantially orthogonal direction with respect to the support face (7).

6. Fixing system as claimed in any one of claims 1 to 4, **characterised in that** the radial tabs (9) are of a substantially bent or L shape, the terminal part of which extends substantially parallel with the support face (7).

7. Fixing system as claimed in any one of claims 1 to 6, **characterised in that** the periphery of the orifice (3) has at least two deformed radial tabs (9).

8. Fixing system as claimed in any one of claims 1 to 7, **characterised in that** the insert part (2) has the shape of a barrel.

9. Fixing system as claimed in claim 8, **characterised in that** the spring blades (5) are pieces joined to the barrel.

10. Fixing system as claimed in any one of claims 1 to 7, **characterised in that** it comprises at least two insert parts (2), each substantially U-shaped, a first branch (12) of which has an end (13) joined to the head (4) and a second free branch of which constitutes the blade spring (5).

11. Lock mechanism used in conjunction with a fixing system as claimed in any one of claims 1 to 10.

## Patentansprüche

1. Befestigungssystem für ein Teil im Kontakt mit einem Blech (1) durch Einfügen eines Einfügungsbereiches (2) des Teiles in eine Öffnung (3) des Blechs (1) bis zu einem Andruck eines kopfartigen Endstückes (4) des Teils gegen das Blech (1), wobei die jeweiligen Formen des Einfügungsbereiches (2) und der Öffnung (3) so vorgesehen sind, dass sie ein Verdrehen des Einfügungsbereiches (2) in der Öffnung (3) verhindern, wobei der Einfügungsbereich (2) Blattfedern (5) umfasst, die freie Enden (6) aufweisen, die sich derart radial nach außen erstrecken, dass sie bei radialer Beanspruchung nach innen während des Einfügens in ihre Ausgangsposition zurückkehren und sich einem Herausziehen des Teils widersetzen, wenn der Kopf (4) in die Nähe der Andruckposition auf einer Andruckfläche (7) des Blechs (1) kommt,
**dadurch gekennzeichnet, dass**
das Blech (1) ein dünnes Blech ist und dass Umgebungsabschnitte (8) der Öffnung (3), deren Anzahl mit der Anzahl der Blattfedern (5) übereinstimmt, als radiale Laschen (9) zugeschnitten und dann so verformt sind, dass sie mit den freien Endstücken (10) dieser radialen Laschen der Andruckfläche (7) gegenüberliegend über das dünne Blech (1) hervorstehen, wobei sie einen axialen Abstand H zwischen der Andruckfläche (7) und den freien Endstücken (10) der radialen Laschen (9) aufweisen, der im wesentlichen mit dem Abstand zwischen dem Kopf (4) und den freien Enden (6) der Blattfedern (5) übereinstimmt.

2. Befestigungssystem nach Anspruch 1, **dadurch gekennzeichnet, dass** die radialen Laschen (9) äußere Einkerbungen zur Winkelpositionierung des Einfügungsbereiches (2) hinsichtlich seines Einfügens begrenzen, wobei die Breite der Einkerbungen an die Breite der Blattfedern (5) angepasst ist, um die Drehbewegung des Einfügungsbereiches (2) in der Öffnung (3) so weit wie möglich zu verringern.

3. Befestigungssystem nach Anspruch 1 oder 2, **dadurch gekennzeichnet, dass** die Blattfedern (5) an ihrem freien Ende (6) eine abgeschrägte Form aufweisen.

4. Befestigungssystem nach einem der Ansprüche 1 bis 3, **dadurch gekennzeichnet, dass** die Blattfedern (5) zumindest in einem Bereich (11) in der Nähe ihres freien Endes (6) eine verdrehte Form aufweisen.

5. Befestigungssystem nach einem der Ansprüche 1 bis 4, **dadurch gekennzeichnet, dass** sich die radialen Laschen (9) in einer im wesentlichen senkrechten Richtung zur Andruckfläche (7) erstrecken.

6. Befestigungssystem nach einem der Ansprüche 1 bis 4, **dadurch gekennzeichnet, dass** die radialen Laschen (9) eine im wesentlichen gewinkelte oder eine L-Form aufweisen, deren Endabschnitt sich im wesentlichen parallel zur Andruckfläche (7) erstreckt.

7. Befestigungssystem nach einem der Ansprüche 1 bis 6, **dadurch gekennzeichnet, dass** der Rand der Öffnung (3) mindestens zwei verformte radiale Laschen (9) umfasst.

8. Befestigungssystem nach einem der Ansprüche 1 bis 7, **dadurch gekennzeichnet, dass** der Einfügungsbereich (2) eine Art Hülsenform aufweist.

9. Befestigungssystem nach Anspruch 8, **dadurch gekennzeichnet, dass** die Blattfedern (5) zur Hülse hinzugefügte Teile sind.

10. Befestigungssystem nach einem der Ansprüche 1 bis 7, **dadurch gekennzeichnet, dass** es mindestens zwei Einfügungsbereiche (2) umfasst, die jeweils einen im wesentlichen U-förmigen Zuschnitt aufweisen, von welchem ein erster Arm (12) ein Ende (13) aufweist, das fest mit dem Kopf (4) verbunden ist und von dem ein zweiter, freier Arm die Blattfeder (5) bildet.

11. Schließmechanismus in Verbindung mit einem Befestigungssystem entsprechend einem der Ansprüche 1 bis 10.
